# EUROPEAN PATENT SPECIFICATION

(11) **EP 4 575 413 B1**
(45) Date of publication and mention of the grant of the patent: **01.07.2026**
(21) Application number: 23217990.3
(22) Date of filing: 19.12.2023
(51) Int. Cl.: G01D 5/02, G01D 5/04, G01D 13/00

(54) **MECHANICAL POSITION INDICATOR AND ACTUATOR OF AUTOMATION TECHNOLOGY**
MECHANISCHER POSITIONSGEBER UND AKTOR DER AUTOMATISIERUNGSTECHNIK
INDICATEUR DE POSITION MÉCANIQUE ET ACTIONNEUR DE TECHNOLOGIE D'AUTOMATISATION

(43) Date of publication of application: 25.06.2025
(73) Proprietor: AUMA Riester GmbH & Co. KG, 79379 Müllheim (DE)
(72) Inventor: Tritschler, Matthias, 79258 Hartheim (DE); Ingenhoven, Benjamin, 79379 Müllheim (DE)
(74) Representative: Mertzlufft-Paufler, Cornelius

(56) References cited:
- WO-A1-2014/078877
- US-A- 5 535 698
- US-A- 5 890 450
- US-B2- 8 467 907

## Description

The invention is concerned with a mechanical position indicator of an actuator of automation technology and such an actuator.

Actuators of automation technology are used to operate mechanical devices such as valves in process industry tubing for example. By opening or closing valves in such tubing the flow of a process medium is permitted or inhibited. In this way for example a chemical reaction or a filling process can be controlled.

For operators of such a process industry plant often it is important to be able to check an actuation state of a mechanical device. Actuators according to the state of the art as shown for example in US9618136B2 often come with a mechanical position indicator. Another kind of valve position indicator is known from US5890450A.

However, different types of mechanical devices need different types of actuators with different drives and gear sets. Mechanical position indicators have to be adapted to each type of actuator. However, an actuation range of a certain actuator type also depends on the application connected to it, such that limits of said actuation range visibly are not well defined.

The object of the invention is to provide a mechanical position indicator with a visibly well-defined actuation range and an actuator of automation technology comprising such a mechanical position indicator.

This problem is solved with a mechanical position indicator according to claim 1 and an actuator according to claim 13.

An inventive mechanical position indicator for representing an actuation state of an actuator of automation technology, comprises:
an indicating element for representing said actuation state;
wherein said actuation state is represented by a linear position of said indicating element, wherein said linear position of said indicating element has a first limit and a second limit,
wherein said first limit is fix,
wherein the mechanical position indicator comprises a slidable mask at least partially surrounding said indicating element in a cross section, wherein the mask is set up to indicate a position of said second limit.

In this way variabilities of said second limit dependent on the application or actuator do not pose a threat of misinterpreting an actuation state, as with the help of said mask said second limit may be defined visually.

In an embodiment in a mounted state of said mechanical position indicator the second limit with respect to a mounting orientation is a limit facing said actuator.

In an embodiment said mask keeps its position due to friction or a fixation mechanism such as a screw mechanism or a latch mechanism or such alike.

In an embodiment a spatial separation of both limits is at least 10 centimeters, and preferably at least 20 centimeters and especially at least 30 centimeters,
and/or
wherein said spatial separation is at most 200 centimeters, and preferably at most 150 centimeters and especially at most 100 centimeters.

In this way a well visibility of said mechanical position indicator is supported.

In an embodiment a diameter of said indicating element in a cross section is at least 2 centimeters and preferably at least 5 centimeters and especially at least 10 centimeters
and/or
wherein said diameter is at most 70 centimeters, and preferably at most 50 centimeters and especially at most 30 centimeters.

In this way a well visibility of said mechanical position indicator is supported.

In an embodiment a ratio of a separation on an upper limit of said linear position and a lower limit of said linear position and a diameter of said indicating element is
at least 2 and preferably at least 3 and especially at least 5
   and/or
at most 20 and preferably at most 15 and especially at most 10.

In this way a well visibility of said mechanical position indicator is supported.

In an embodiment said mask is arranged outside said housing. In this way the visual definition of said second limit may easily and robustly performed.

In an embodiment said indicating element has a first color,
and wherein a fix background element has a second color, wherein said first color and said second color on a color wheel respectively color circle have an angular distance of at least 60 degrees.

Said color circle may be a color circle based on RGB or CMY or HSV or HSL color standard. In this way it is ensured, that the colors of the indication element and the background element are well different with respect to human perception. For example, the color combination green and red is useful, however red and orange is not.

In an embodiment the mechanical position indicator comprises:
an indicating element for representing said actuation state;
an indicator gear set for driving said indicating element, wherein said indicator gear set comprises an input and an output;
a motion transmitter for transmitting a motion of said indicator gear set to said indicating element being mechanically connected to the indicating element and releasably connected to the indicator gear set
wherein the indicator gear set comprises at least one planetary gear stage, wherein a transmission ratio to drive said indicating element is alterable by exchanging at least one of said at least one planetary gear stage or by exchanging said gear set.

In this way said mechanical position indicator may be easily adapted to different applications and/or actuators.

Advantageously said at least one planetary gear stage each is modular such that it may be easily connected to or disconnected from another planetary gear stage or said motion transmitter.

In an embodiment said mechanical position indicator comprises at least two planetary gear stages being connected by a coupling. In that way, by exchanging at least one of said gear stages said transmission ration may be adapted to a different application and/or actuator.

In an embodiment he motion transmitter further comprising a spindle and a spindle nut, wherein said indicator element and said spindle nut are connected to each other fixedly, wherein said indicator gear set is arranged for rotating said spindle and wherein said indicator element is mounted rotationally fixed.

An inventive actuator of automation technology comprising:
an output with an output shaft for actuating an mechanical device such as a valve;
an actuator gear set;
a drive, wherein the drive is set up for driving said output, and wherein the actuator gear set is set up for transmitting a force or a torque from the drive towards the output shaft;
an actuator housing arrangement, wherein said output shaft, said drive and said gear set are arranged inside said actuator housing arrangement,
wherein the actuator comprises an inventive mechanical position indicator, wherein said actuator gear set is set up for driving said indicator gear set.

In an embodiment said drive is an electric, hydraulic, or pneumatic drive, wherein the actuator comprises an electronic circuit for actuating said drive.

In the following the invention is explained with the help of figures.
Fig. 1 shows an angled view of an exemplary inventive actuator;
Fig. 2 shows a front view of the actuator as shown in Fig. 1;
Fig. 3 shows a longitudinal section of the exemplary inventive mechanical position indicator as shown in Fig. 1;
Fig. 4 a) shows a longitudinal section of an exemplary inventive indicator gear set and Fig. 4 b) an angular view on a part of said indicator gear set;
Fig. 5 a) shows a longitudinal section of an exemplary inventive ball coupling and Fig. 5 b) shows an angular view on a part of said indicator gear set, and Fig. 5 c) shows embodiments of parts of said ball coupling;
Fig. 6 shows an exemplary assembly scheme of an exemplary inventive actuator.

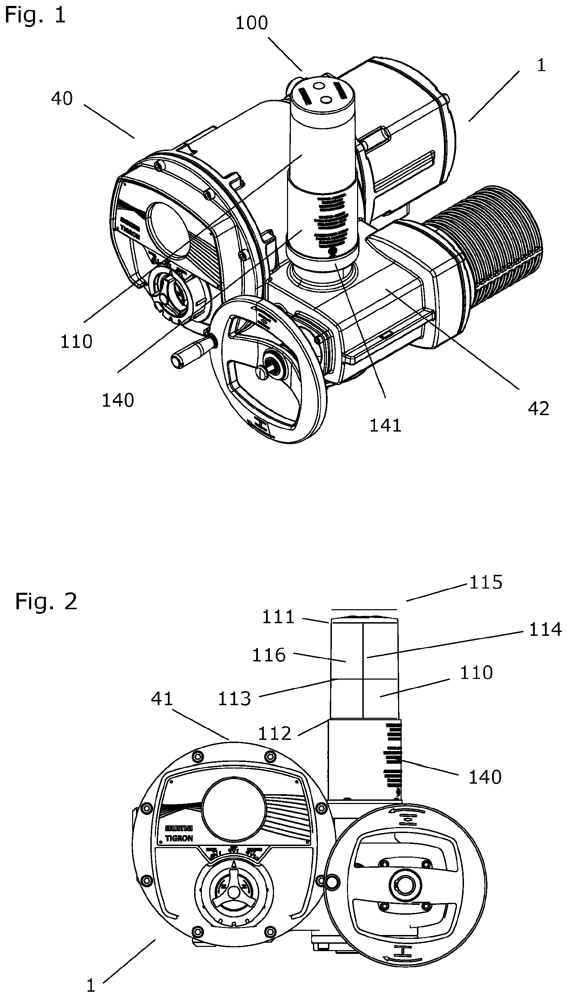

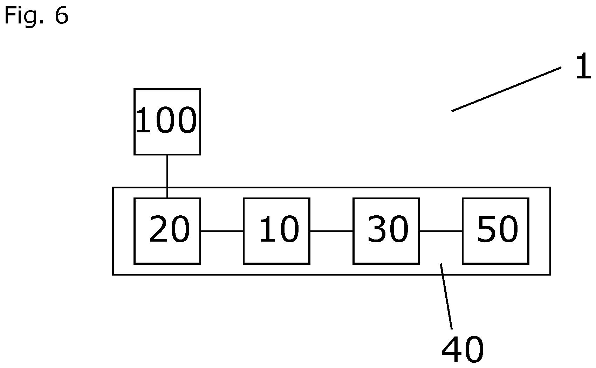

Fig. 1 shows an angled view of an exemplary inventive actuator 1, and Fig. 2 shows a front view of said actuator, said actuator 1 comprising a housing arrangement 40, in which a drive 30, an electronic circuit 50, an actuator gear set 10 and an output 20 are allocated, see also Fig. 6. The drive 30 is arranged for delivering a force or a torque onto a mechanical device such as a valve, and may be an electric, pneumatic, or hydraulic drive. Said electronic circuit is arranged for controlling said drive. Said actuator gear set transmits the drive force respectively drive torque onto said output, to which output said mechanic device is couplable.

To give an operator information about an actuation state of said mechanical device, said actuator comprises a mechanical position indicator 100, which translates the actuation of said mechanical device into a linear position 113 of an indicating element 110. The linear position 113 of said indicating element 110 is between a first limit 111 and a second limit 112 along a longitudinal axis 117 of said mechanical position indicator, wherein for example in a mounted state with respect to a mounting orientation the first limit is a limit averted from said actuator, and the second limit is a limit facing said actuator. Dependent on the actuator and on the application respectively mechanical device to control, one of said first limit and said second limit varies. The mounting orientation may be a vertical as shown here or horizontal or a diagonal for example.

The actuator housing arrangement has a maximal extension 41.

In an embodiment as shown said first limit and said second limit of said linear position of said indicating element protrude said maximal extension, wherein a spatial separation of said first limit and said second limit is at least 1/2 of a cube root of said actuator housing volume 42,
and/or
wherein said spatial separation is at least 15 centimeters, and preferably at least 20 centimeters and especially at least 25 centimeters,
   and/or
wherein said spatial separation is at most 300 centimeters, and preferably at most 250 centimeters and especially at most 200 centimeters,
   and/or
wherein said spatial separation is at least a half of a largest diameter of an convex envelope of said housing arrangement.

In this way the mechanical position indicator is well visible from a notable distance, such that an actuation position respectively actuation state can be shown also to more distant observers. Therefor for example maintaining control over an industrial plant is aided.

In an embodiment a diameter 115 of said indicating element 110 in a cross section is at least 2 centimeters and preferably at least 5 centimeters and especially at least 6 centimeters
and/or
wherein said diameter is at most 70 centimeters, and preferably at most 50 centimeters and especially at most 30 centimeters.

A least diameter of said mechanical position indicator further aids maintaining control over said industrial plant. A maximum diameter of said mechanical position indicator ensures a manageability of said mechanical position indicator.

In an embodiment a ratio of a separation of said first limit 111 and said second limit 112 and said diameter 115 of said indicating element 110 is
at least 2 and preferably at least 3 and especially at least 5
   and/or
at most 20 and preferably at most 15 and especially at most 10.

In an embodiment said indicating element 110 is housed within an optically transparent housing part 151 of a housing 150 as shown in Figs. 1 to 3.

In an embodiment said indicating element 110 has a first color, and wherein a background element 116 being partially covered by said indicating element dependent on said actuation state has a second color, wherein said first color and said second color on a gradient color wheel respectively gradient color circle have an angular distance of at least 50 degrees and especially at least 60 degrees. Said color circle may be a color circle based on RGB or CMY or HSV or HSL color standard. In this way it is ensured, that the colors of the indication element and the background element are well different with respect to human perception. For example, the color combination green and red is useful, however red and orange is not.

In an embodiment said indicating element 110 in a horizontal cross section offers the possibility to check said actuation state within an angular range of at least 180 and preferably at least 270 degrees and especially 360 degrees as shown in Figs. 1, 2 and 3.

As shown exemplified this can be achieved with said indicating element following a cylindrical form, wherein said background element is encompassed by said indicating element. The indicating element covers said background element dependent on the actuation state of a mechanical device.

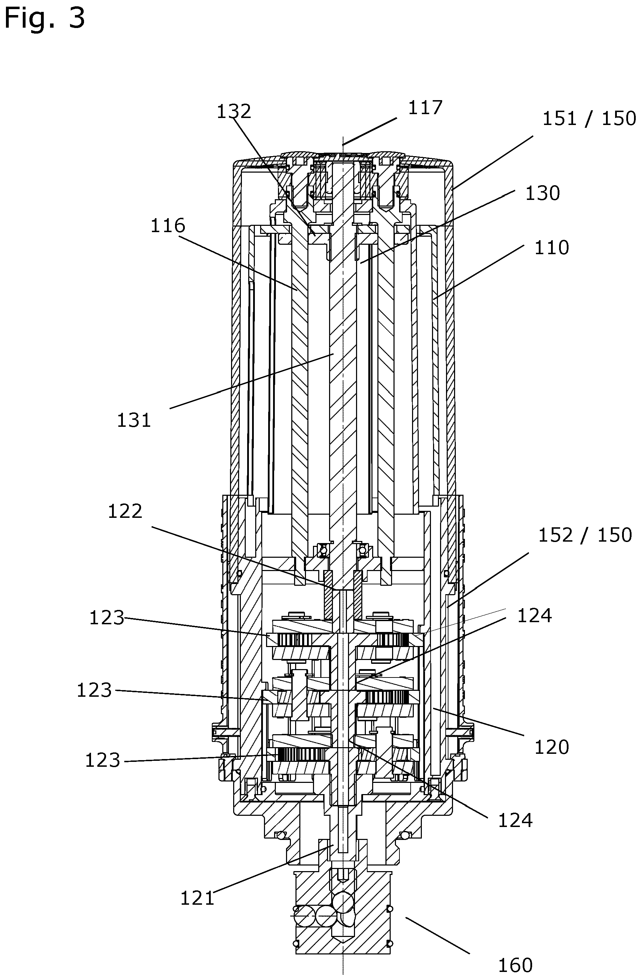

According to the invention as shown, the mechanical position indicator comprises a mask 140 for demonstrating a position of said second limit 112. The mask 140 is slidable along an axis of said mechanical position indicator and in an embodiment as shown fixable with a mask fixation mechanism 141 such as a screw mechanism or a latch mechanism or such alike. Alternatively, the mask may keep its position due to friction. Said second limit is dependent on the mechanical device the actuator is going to be attached to, and dependent on a chosen actuator gear set 10 as shown in Fig. 6 and dependent on a chosen indicator gear set 120 as shown in Fig. 3. With said slidable mask, the mechanical position indicator can be adapted to a certain application so that the varying limit of said linear position 113 is visually well defined.

Fig. 3 shows a longitudinal section of the mechanical position indicator 100 as shown in Fig. 1 and 2 comprising an indicator gear set 120, said mask 140, and a fixation mechanism 160 for fixing said mechanical position indicator with said actuator 1. The indicator gear set comprises an input 121 for receiving a force or a torque and an output for driving the indicating element 110. A motion transmitter 130 is arranged for receiving a motion from said output and transmitting said motion of said indicator gear set to said indicating element being mechanically connected to the indicating element and connected to the indicator gear set via the output 122. The motion transmitter comprises a spindle 131 and a spindle nut 132,
wherein said indicating element 110 and said spindle nut are connected to each other fixedly, wherein said indicator gear set 120 is arranged for rotating said spindle and wherein said indicating element is mounted rotationally fixed. In an embodiment as shown said mechanical position indicator 110 comprises an optically transparent housing part 151 of a housing 150 for protecting said motion transmitter and said planetary gear set from harm and dirt. As shown the planetary gear set is arranged within a gear set housing part 152.

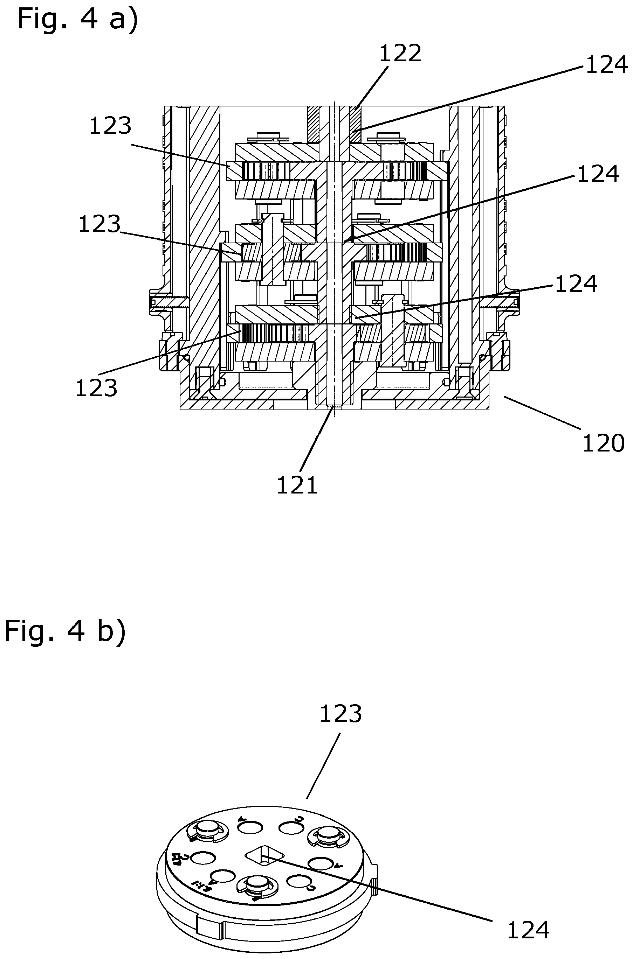

Fig. 4 a) shows a longitudinal section of an exemplary embodiment of said indicator gear set 120, and Fig. 4 b) shows an angular view on a modular planetary gear stage 123. In the embodiment as shown, said indicator gear set comprises a set of three planetary gear stages each being connected with a coupling 124. The number of planetary gear stages may vary between 1 and 5. Especially the number of said planetary gear stages is at least 2. With the help of said at least one planetary gear stage a transmission ratio between said actuator gear set respectively actuator output and said motion transmitter respectively said indicating element 110 may be adjusted by exchanging one or more planetary gear stages of by exchanging the entire indicator gear set being connected with the motion transmitter 130 with a coupling 124. In this way, the mechanical position indicator may be adapted to a wide range of applications as well as actuators in such a way, that one of said first limit 111 and said second limit 112, here the second limit 112 may be kept in a certain axial interval of said longitudinal axis 117. A modular embodiment of said planetary gear stages as shown in Fig. 4 b) increases an adaptability of said mechanical position indicator.

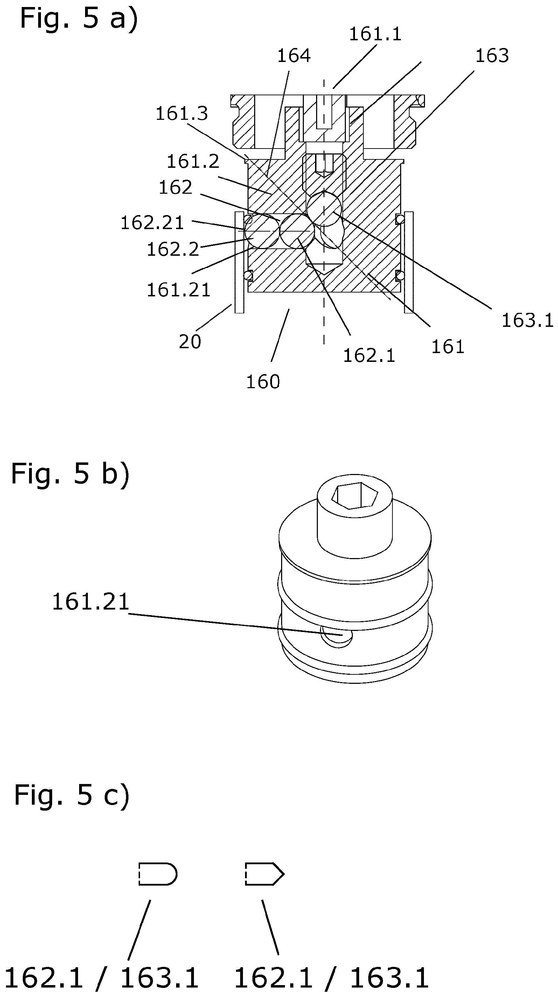

Figs. 5 a) to 5 c) illustrate exemplary inventive embodiments of said fixation mechanism 160. Said fixation mechanism is arranged for fixing said mechanical position indicator 110 with said hollow output shaft 20 of said actuator or a hollow output shaft of said actuator gear set 10. Said fixation mechanism 160 comprises a hollow connection shaft 161 with a shaft wall 161.2 and a shaft axis 161.1, the hollow connection shaft comprising at least one pass 161.21 through said shaft wall;
at least one radially acting friction device 162 situated in a corresponding pass; one axially acting force delivery device 163 situated inside the hollow connection shaft arranged for setting a force on said friction device, which friction device in turn when in a mounted state a force is applied by that force delivery device. The pass advantageously, but not necessarily is oriented radially with respect to an output shaft axis or said shaft axis 161.1. At least a radial component of said orientation is larger than a tangential component.

In that way a friction grip between the actuator output respectively actuator gear set output and said mechanical position indicator input 121 is achieved. With additionally rotationally fixing said housing 150 of said mechanical position indicator for example at said housing arrangement, a movement of said drive 30 can be transferred to said indicating element 110. The rotational fixation can be achieved for example with a bracket mechanism or with a screwing mechanism.

As shown exemplary in this embodiment, said force delivery device 163 comprises a force delivery element 163.1, wherein each of said at least one friction device 162 comprises a force accepting element 162.1, wherein an angle between a tangent plane 164 through a contact point between said force delivery element and said force accepting element and said shaft axis is 45 degrees. Said angle may be less than 80 degrees, and exemplary less than 70 degrees and especially less than 60 degrees
and / or
more than 10 degrees, and exemplary more than 20 degrees and especially more than 30 degrees. In that way, applying a force onto said force accepting element 162.1 is translated well into a movement of said force accepting element and therefore a buildup of friction between said fixation mechanism 160 and said output 20 respectively output of said actuator gear set 10.

A friction element is arranged for creating friction between said fixation mechanism 160 and said hollow actuator output 20 respectively hollow actuator gear shaft via a friction part 162.21 of said friction element, said friction part protruding from a corresponding one of said pass.

As shown exemplary in the embodiment of Fig. 5a), said force delivery element 163.1, said force accepting element 162.1 and said friction element 162.2 are spherical. In this way a very simple and effective force guiding mechanism can be arranged. Alternatively, the force accepting element 162.1 and the friction element 162.2 may be one single element. Alternatively, instead of being spherical, said elements may be also ellipsoidal. Alternatively, said elements at least partially follow a cone (see Fig. 5 c)), or an ellipsoid, or a sphere (see Fig. 5 c)) or a polyhedron such as a tetrahedron or a pentahedron, especially a regular polyhedron, or a wedge. The mechanism works if between said force delivery element and said force accepting element a contact point or contact line or contact area with said tangential plane inclined to said shaft axis 161.1 is arranged.

Fig. 6 depicts a schematic of a functional relationship of different parts of an exemplary inventive actuator 1. The actuator comprises a drive 30, an electronic circuit 50 to control said drive, an actuator gear set 10 and an output 20 to actuate a mechanical device such as a valve. The drive is arranged to charge said output with a force or a torque. Said actuator gear set is arranged to transmit said force respectively said torque from said drive to said output. The inventive mechanical position indicator may be connected to said output 20 as shown here or to the actuator gear set 10.

Features of embodiments are exchangeable and/or combinable if there are no technical or logical contradictions or otherwise stated.

The mechanical position indicator as shown may also be applied to purely mechanical actuators actuated for example with a hand wheel.

### Reference number list

- 1: Actuator
- 10: Actuator gear set
- 20: Output
- 30: Drive
- 40: Actuator housing arrangement
- 41: Maximal extension
- 42: Actuator housing volume
- 50: Electronic circuit
- 100: Mechanical position indicator
- 110: Indicating element
- 111: First limit
- 112: Second limit
- 113: Linear Position
- 114: Spatial separation
- 115: Diameter
- 116: Background element
- 120: Indicator gear set
- 121: Input
- 122: Output
- 123: Planetary gear stage
- 124: Coupling
- 130: Motion transmitter
- 131: Spindle
- 132: Spindle nut
- 140: Mask
- 141: Mask fixation mechanism
- 150: Housing
- 151: Transparent housing part
- 152: Gear set housing part
- 160: Fixation mechanism
- 161: Hollow connection shaft
- 161.1: Shaft axis
- 161.2: Shaft wall
- 161.21: Shaft pass
- 161.3: Shaft stop
- 162: Friction device
- 162.1: Force accepting element
- 162.2: Friction element
- 162.21: Friction part
- 163: Force delivery device
- 163.1: Force delivery element
- 164: Tangent plane

## Claims

1. Mechanical position indicator (100) for representing an actuation state of an actuator of automation technology, comprising:
an indicating element (110) for representing said actuation state;
wherein said actuation state is represented by a linear position (113) of said indicating element, wherein said linear position of said indicating element has a first limit (111) and an opposite second limit (112),
wherein said first limit is fix,
wherein the mechanical position indicator comprises a slidable mask at least partially surrounding said indicating element in a cross section, wherein the mask is set up to indicate a position of said second limit.

2. Mechanical position indicator according to claim 1,
wherein said mask (140) keeps its position due to friction or a mask fixation mechanism (141) such as a screw mechanism or a latch mechanism or such alike.

3. Mechanical position indicator according to claim 1 or 2,
wherein a spatial separation (114) of both limits is at least 10 centimeters, and preferably at least 20 centimeters and especially at least 30 centimeters,
and/or
wherein said spatial separation is at most 200 centimeters, and preferably at most 150 centimeters and especially at most 100 centimeters.

4. Mechanical position indicator according to one of former claims,
wherein a diameter (115) of said indicating element in a cross section is at least 2 centimeters and preferably at least 5 centimeters and especially at least 10 centimeters
and/or
wherein said diameter is at most 70 centimeters, and preferably at most 50 centimeters and especially at most 30 centimeters.

5. Mechanical position indicator according to one of the former claims,
wherein a ratio of a separation said first limit of said linear position and said second limit of said linear position and a diameter of said indicating element is
at least 2 and preferably at least 3 and especially at least 5
and/or
at most 20 and preferably at most 15 and especially at most 10.

6. Mechanical position indicator according to one of former claims,
wherein said indicating element (110) is housed within an optically transparent housing part (151) of a housing (150) of said mechanical position indicator.

7. Mechanical position indicator according to claim 6,
wherein said mask (140) is arranged outside said housing (150).

8. Mechanical position indicator according to one of former claims,
wherein said indicating element (110) has a first color,
and wherein a fix background element (116) has a second color, wherein said first color and said second color on a color wheel respectively color circle have an angular distance of at least 60 degrees.

9. Mechanical position indicator according to one of former claims,
further comprising
an indicator gear set (120),
a motion transmitter (130) for transmitting a motion of said indicator gear set to said indicating element being mechanically connected to the indicating element and releasably connected to the indicator gear set.

10. Mechanical position indicator according to one of former claims,
wherein
the indicator gear set comprises at least one planetary gear stage (123), wherein a transmission ratio to drive said indicating element is alterable by exchanging at least one of said at least one planetary gear stage or by exchanging said gear set.

11. Mechanical position indicator according to claim 10,
further comprising at least two planetary gear stages (123) being connected by a releasable coupling.

12. Mechanical position indicator according to claim 10 or 11,
the motion transmitter (130) further comprising a spindle (131) and a spindle nut (132),
wherein said indicating element (110) and said spindle (132) nut are connected to each other fixedly, wherein said indicator gear set (120) is arranged for rotating said spindle and wherein said indicator element is mounted rotationally fixed.

13. Actuator (1) of automation technology comprising:
an output (20) with an output shaft for actuating an mechanical device such as a valve;
an actuator gear set (10);
a drive (30), wherein the drive is set up for driving said output, and wherein the actuator gear set is set up for transmitting a force or a torque from the drive towards the output shaft;
an actuator housing arrangement (40), wherein said output shaft, said drive and said gear set are arranged inside said actuator housing arrangement,
**characterized in that**
the actuator comprises a mechanical position indicator (100) according to one of former claims, wherein said actuator gear set is set up for driving said indicator gear set.

14. Actuator according to claim 13,
wherein in a mounted state the second limit with respect to a mounting orientation is a limit arranged to face said actuator.

15. Actuator according to claim 13 or 14,
wherein said drive is an electric, hydraulic, or pneumatic drive,
wherein the actuator comprises an electronic circuit (50) for actuating said drive.

## Patentansprüche

1. Mechanischer Positionsgeber (100) zum Darstellen eines Betätigungszustands eines Aktors der Automatisierungstechnik, umfassend:
ein Geberelement (110) zum Darstellen des Betätigungszustands;
wobei der Betätigungszustand durch eine lineare Position (113) des Geberelements dargestellt wird, wobei die lineare Position des Geberelements eine erste Grenze (111) und eine gegenüberliegende zweite Grenze (112) aufweist, wobei die erste Grenze fest ist, wobei der mechanische Positionsgeber eine verschiebbare Maske umfasst, die das Geberelement in einem Querschnitt zumindest teilweise umgibt, wobei die Maske so eingerichtet ist, dass sie eine Position der zweiten Grenze anzeigt.

2. Mechanischer Positionsgeber nach Anspruch 1, wobei die Maske (140) ihre Position aufgrund von Reibung oder eines Maskenbefestigungsmechanismus (141), wie etwa eines Schraubenmechanismus oder eines Riegelmechanismus oder dergleichen, beibehält.

3. Mechanischer Positionsgeber nach Anspruch 1 oder 2, wobei eine räumliche Trennung (114) beider Grenzen mindestens 10 Zentimeter und vorzugsweise mindestens 20 Zentimeter und insbesondere mindestens 30 Zentimeter beträgt und/oder wobei die räumliche Trennung höchstens 200 Zentimeter und vorzugsweise höchstens 150 Zentimeter und insbesondere höchstens 100 Zentimeter beträgt.

4. Mechanischer Positionsgeber nach einem der vorhergehenden Ansprüche, wobei ein Durchmesser (115) des Geberelements in einem Querschnitt mindestens 2 Zentimeter und vorzugsweise mindestens 5 Zentimeter und insbesondere mindestens 10 Zentimeter beträgt und/oder wobei der Durchmesser höchstens 70 Zentimeter und vorzugsweise höchstens 50 Zentimeter und insbesondere höchstens 30 Zentimeter beträgt.

5. Mechanischer Positionsgeber nach einem der vorhergehenden Ansprüche, wobei ein Verhältnis einer Trennung der ersten Grenze der linearen Position und der zweiten Grenze der linearen Position und eines Durchmessers des Geberelements mindestens 2 und vorzugsweise mindestens 3 und insbesondere mindestens 5 und/oder höchstens 20 und vorzugsweise höchstens 15 und insbesondere höchstens 10 beträgt.

6. Mechanischer Positionsgeber nach einem der vorhergehenden Ansprüche, wobei das Geberelement (110) innerhalb eines optisch transparenten Gehäuseteils (151) eines Gehäuses (150) des mechanischen Positionsgebers untergebracht ist.

7. Mechanischer Positionsgeber nach Anspruch 6, wobei die Maske (140) außerhalb des Gehäuses (150) angeordnet ist.

8. Mechanischer Positionsgeber nach einem der vorhergehenden Ansprüche, wobei das Geberelement (110) eine erste Farbe aufweist, und wobei ein festes Hintergrundelement (116) eine zweite Farbe aufweist, wobei die erste Farbe und die zweite Farbe auf einem Farbrad bzw. Farbkreis einen Winkelabstand von mindestens 60 Grad aufweisen.

9. Mechanischer Positionsgeber nach einem der vorhergehenden Ansprüche, ferner umfassend
einen Geberzahnradsatz (120),
ein Bewegungsübertragungselement (130) zum Übertragen einer Bewegung des Geberzahnradsatzes an das Geberelement, das mechanisch mit dem Geberelement verbunden ist und lösbar mit dem Geberzahnradsatz verbunden ist.

10. Mechanischer Positionsgeber nach einem der vorhergehenden Ansprüche, wobei der Geberzahnradsatz mindestens eine Planetenradstufe (123) umfasst, wobei ein Übersetzungsverhältnis zum Antreiben des Geberelements durch Austauschen von mindestens einer der mindestens einen Planetenradstufe oder durch Austauschen des Zahnradsatzes veränderbar ist.

11. Mechanischer Positionsgeber nach Anspruch 10,
ferner umfassend mindestens zwei Planetenradstufen (123), die durch lösbares Koppeln verbunden sind.

12. Mechanischer Positionsgeber nach Anspruch 10 oder 11,
wobei das Bewegungsübertragungselement (130) ferner eine Spindel (131) und eine Spindelmutter (132) umfasst,
wobei das Geberelement (110) und die Spindelmutter (132) fest miteinander verbunden sind, wobei der Geberzahnradsatz (120) zum Drehen der Spindel ausgelegt ist und wobei das Geberelement drehfest montiert ist.

13. Aktor (1) der Automatisierungstechnik, umfassend:
einen Ausgang (20) mit einer Ausgangswelle zum Betätigen einer mechanischen Vorrichtung, wie etwa eines Ventils;
einen Aktorzahnradsatz (10);
einen Antrieb (30), wobei der Antrieb zum Antreiben des Ausgangs eingerichtet ist und wobei der Aktorzahnradsatz zum Übertragen einer Kraft oder eines Drehmoments von dem Antrieb zu der Ausgangswelle eingerichtet ist;
eine Aktorgehäuseanordnung (40), wobei die Ausgangswelle, der Antrieb und der Zahnradsatz innerhalb der Aktorgehäuseanordnung angeordnet sind,
**dadurch gekennzeichnet, dass**
der Aktor einen mechanischen Positionsgeber (100) nach einem der vorhergehenden Ansprüche umfasst, wobei der Aktorzahnradsatz zum Antreiben des Geberzahnradsatzes eingerichtet ist.

14. Aktor nach Anspruch 13,
wobei die zweite Grenze in Bezug auf eine Montageausrichtung in einem montierten Zustand eine Grenze ist, die so angeordnet ist, dass sie dem Aktor zugewandt ist.

15. Aktor nach Anspruch 13 oder 14,
wobei der Antrieb ein elektrischer, hydraulischer oder pneumatischer Antrieb ist,
wobei der Aktor eine elektronische Schaltung (50) zum Betätigen des Antriebs umfasst.

## Revendications

1. Indicateur de position mécanique (100) destiné à représenter un état d'actionnement d'un actionneur de technologie d'automatisation, comprenant :
un élément indicateur (110) destiné à représenter ledit état d'actionnement ;
dans lequel ledit état d'actionnement est représenté par une position linéaire (113) dudit élément indicateur, dans lequel ladite position linéaire dudit élément indicateur présente une première limite (111) et une deuxième limite opposée (112),
dans lequel ladite première limite est fixe,
dans lequel l'indicateur de position mécanique comprend un masque coulissable entourant au moins partiellement ledit élément indicateur en coupe, dans lequel le masque est disposé pour indiquer une position de ladite deuxième limite.

2. Indicateur de position mécanique selon la revendication 1,
dans lequel ledit masque (140) conserve sa position grâce au frottement ou à un mécanisme de fixation du masque (141) tel qu'un mécanisme à vis ou un mécanisme à loquet ou similaire.

3. Indicateur de position mécanique selon la revendication 1 ou 2,
dans lequel une séparation spatiale (114) entre les deux limites est d'au moins 10 centimètres, et de préférence d'au moins 20 centimètres et notamment d'au moins 30 centimètres,
et/ou
dans lequel ladite séparation spatiale est au plus de 200 centimètres, et de préférence au plus de 150 centimètres et notamment au plus de 100 centimètres.

4. Indicateur de position mécanique selon l'une des revendications précédentes,
dans lequel un diamètre (115) dudit élément indicateur en coupe est d'au moins 2 centimètres, de préférence d'au moins 5 centimètres et notamment d'au moins 10 centimètres et/ou
dans lequel ledit diamètre est au plus de 70 centimètres, de préférence au plus de 50 centimètres et notamment au plus de 30 centimètres.

5. Indicateur de position mécanique selon l'une des revendications précédentes,
dans lequel un rapport entre une séparation de ladite première limite de ladite position linéaire et ladite deuxième limite de ladite position linéaire et un diamètre dudit élément indicateur est
d'au moins 2, de préférence d'au moins 3 et notamment d'au moins 5 et/ou
au plus de 20, de préférence au plus de 15 et notamment au plus de 10.

6. Indicateur de position mécanique selon l'une des revendications précédentes,
dans lequel ledit élément indicateur (110) est logé à l'intérieur d'une partie de boîtier optiquement transparente (151) d'un boîtier (150) dudit indicateur de position mécanique.

7. Indicateur de position mécanique selon la revendication 6, dans lequel ledit masque (140) est agencé à l'extérieur dudit boîtier (150).

8. Indicateur de position mécanique selon l'une des revendications précédentes,
dans lequel ledit élément indicateur (110) présente une première couleur,
et dans lequel un élément de fond fixe (116) présente une deuxième couleur, dans lequel ladite première couleur et ladite deuxième couleur sur une roue chromatique respectivement un cercle chromatique, ont une distance angulaire d'au moins 60 degrés.

9. Indicateur de position mécanique selon l'une des revendications précédentes,
comprenant en outre
un train d'engrenages d'indicateur (120),
un transmetteur de mouvement (130) destiné à transmettre un mouvement dudit train d'engrenages d'indicateur audit élément indicateur, étant relié mécaniquement à l'élément indicateur et relié de manière amovible au train d'engrenages d'indicateur.

10. Indicateur de position mécanique selon l'une des revendications précédentes,
dans lequel
le train d'engrenages d'indicateur comprend au moins un étage d'engrenages planétaires (123), dans lequel un rapport de transmission pour entraîner ledit élément indicateur est modifiable en remplaçant au moins l'un desdits au moins un étage d'engrenages planétaires ou en remplaçant ledit train d'engrenages.

11. Indicateur de position mécanique selon la revendication 10,
comprenant en outre au moins deux étages d'engrenages planétaires (123) reliés par un accouplement amovible.

12. Indicateur de position mécanique selon la revendication 10 ou 11,
le transmetteur de mouvement (130) comprenant en outre une fusée (131) et un écrou (132) de fusée,
dans lequel ledit élément indicateur (110) et ledit écrou (132) de fusée sont reliés l'un à l'autre de manière fixe, dans lequel ledit train d'engrenages d'indicateur (120) est agencé pour faire tourner ladite fusée et dans lequel ledit élément indicateur est monté de manière fixe en rotation.

13. Actionneur (1) de technologie d'automatisation comprenant :
une sortie (20) avec un arbre de sortie pour actionner un dispositif mécanique tel qu'une vanne ;
un train d'engrenages d'actionneur (10) ;
un entraînement (30), dans lequel l'entraînement est disposé pour entraîner ladite sortie, et dans lequel le train d'engrenages d'actionneur est disposé pour transmettre une force ou un couple de l'entraînement vers l'arbre de sortie ;
un agencement de boîtier d'actionneur (40), dans lequel ledit arbre de sortie, ledit entraînement et ledit train d'engrenages sont agencés à l'intérieur dudit agencement de boîtier d'actionneur,
**caractérisé en ce que**
l'actionneur comprend un indicateur de position mécanique (100) selon l'une des revendications précédentes, dans lequel ledit train d'engrenages d'actionneur est disposé pour entraîner ledit train d'engrenages d'indicateur.

14. Actionneur selon la revendication 13,
dans lequel, dans un état monté, la deuxième limite par rapport à une orientation de montage est une limite agencée pour faire face audit actionneur.

15. Actionneur selon la revendication 13 ou 14,
dans lequel ledit entraînement est un entraînement électrique, hydraulique ou pneumatique,
dans lequel l'actionneur comprend un circuit électronique (50) destiné à actionner ledit entraînement.
